# EUROPÄISCHE PATENTSCHRIFT

(11) **EP 3 357 387 B1**
(45) Veröffentlichungstag und Bekanntmachung des Hinweises auf die Patenterteilung: **11.11.2020**
(21) Anmeldenummer: 17154999.1
(22) Anmeldetag: 07.02.2017
(51) Int. Cl.: A47K 13/12

(54) **TOILETTENSITZRINGANORDNUNG**
TOILET SEAT RING ASSEMBLY
SYSTÈME DE SIÈGE DE TOILETTES

(43) Veröffentlichungstag der Anmeldung: 08.08.2018
(73) Patentinhaber: Geberit International AG, 8645 Jona (CH)
(72) Erfinder: BACHMANN, Simon, 8620 Wetzikon (CH)
(74) Vertreter: Frischknecht, Harry Ralph

(56) Entgegenhaltungen:
- WO-A1-2014/147928
- CN-A- 104 523 194
- JP-U- H0 469 099
- US-A- 4 133 061

## Beschreibung

### TECHNISCHES GEBIET

Die vorliegende Erfindung betrifft eine Toilettensitzringanordnung nach dem Oberbegriff von Anspruch 1.

### STAND DER TECHNIK

Aus dem Stand der Technik sind Toilettensitzringanordnungen bekannt geworden. Beispielsweise offenbart die EP 2679 127 der Anmelderin eine derartige Anordnung.

Aus der JP 2005-021713 ist zudem eine Toilettensitzringanordnung bekannt geworden, mit welcher erfassbar ist, ob ein Benutzer auf dem Toilettensitzring sitzt. Dabei wird zwischen zwei Kontakten ein elektrischer Schaltkreis geschlossen. Problematisch an dieser technischen Lehre ist insbesondere, dass die Kontakte oxidieren können, so dass gerade in der rauen Umgebung eines Badezimmers ein sicherer Kontakt nicht mehr herstellbar ist.

Aus dem Dokument CN 104 523 194 A ist ein Toilettensitz mit einem Mikroschalter bekannt.

### DARSTELLUNG DER ERFINDUNG

Folglich ist es eine Aufgabe der vorliegenden Erfindung, eine Toilettensitzringanordnung anzugeben, welche die Nachteile des Standes der Technik überwindet. Insbesondere soll die Toilettensitzringanordnung zuverlässig die Benutzung erkennen und bezüglich äusseren Einflüssen möglichst robust sein.

Diese Aufgabe löst der Gegenstand vom Anspruch 1. Demgemäss umfasst eine Toilettensitzringanordnung einen Sitzring, ein Supportelement, insbesondere zur Verbindung der Toilettensitzringanordnung mit einer Toilette, und mindestens ein Scharnier mit einem ersten Scharnierteil und einem zweiten Scharnierteil. Das erste Scharnierteil ist beweglich in einer teilweise mit Wänden begrenzten Aufnahme derart gelagert, dass sich das Scharnier bzw. das erste Scharnierteil bei einer Gewichtsbelastung des Sitzrings in der Aufnahme von einer Ausgangslage in eine Belastungslage verschiebt. Die Aufnahme ist Teil des Supportelementes oder ist mit diesem fest verbindbar. Das zweite Scharnierteil ist zum ersten Scharnierteil verschwenkbar, so dass der Sitzring zum Supportelement verschwenkbar ist. Im Bereich der Aufnahme ist ein kontaktloser Sensor mit einem an der Aufnahme festgelegten ersten Sensorteil und einem am ersten Scharnierteil festgelegten zweiten Sensorteil vorgesehen, mit welchem Sensor das Verschieben des ersten Scharnierteils erfassbar ist. Mit dem kontaktlosen Sensor ist ein Sensorsignal basierend auf dem Verschiebeweg ausgebbar.

Unter einem kontaktlosen Sensor wird ein Sensor verstanden, bei welchem die beiden Sensorteile nicht miteinander in physischen oder mechanischen Kontakt kommen müssen, um ein Sensorsignal auszugeben. Das heisst die Ausgabe von einem Sensorsignal ist ausschliesslich von der Lage der beiden Sensorteile relativ zueinander abhängig, nicht aber von der Frage des Kontaktes. Durch den Einsatz eines kontaktlosen Sensors kann eine Anordnung erreicht werden, welche bezüglich Korrosion robuster ausgebildet ist.

Zudem kann ein Sensorsignal in Relation zum Abstand der beiden Sensorteile ausgegeben werden, was bei der Signalverarbeitung im Zusammenhang mit anderen Systemen, wie beispielsweise mit einem Dusch-WC, vorteilhaft ist.

Die Aufnahme kann ein integraler Bestandteil des Supportelementes sein. Alternativ ist die Aufnahme separat vom Supportelement ausgebildet, welches dann mit der Aufnahme fest verbindbar ist. Supportelement und Aufnahme sind dann mindestens zwei Teile.

Vorzugsweise sind zwei Scharniere gegenüber einander angeordnet, so dass der Toilettensitzring an zwei Orten gelagert ist. Eines der Scharniere kann dabei mit und das andere ohne den Sensor ausgebildet sein. Das heisst, dass die Scharniere vorzugsweise im Wesentlichen baugleich ausgebildet sind, und vorzugsweise nur eines der beiden Scharniere mit dem kontaktlosen Sensor ausgerüstet sind.

Es ist auch denkbar, dass bei beiden Scharnieren ein Sensor angeordnet ist, wobei es auch hier vorteilhaft ist, die beiden Scharniere baugleich auszubilden.

Vorzugsweise ist der Sensor ein induktiver Sensor oder kapazitiver Sensor oder ein optischer Sensor oder eine Lichtschranke.

Besonders bevorzugt ist der kontaktlose Sensor ein Hallsensor, wobei das erste Sensorteil der aktive Sensorteil des Hallsensors und das zweite Sensorteil der passive Sensorteil des Hallsensors ist.

Besonders bevorzugt ist der Hallsensor ein analoger Hallsensor, der ein analoges Sensorsignal ausgibt. Der Einsatz eines digitalen Hallsensors ist auch denkbar.

Der aktive Sensorteil ist vorzugsweise an der Aufnahme und der passive Sensorteil vorzugsweise am ersten Sensorteil angeordnet. Hierdurch wird das aktive Sensorteil nicht bei jeder Betätigung hin und her bewegt. Die umgekehrte Anordnung ist auch denkbar, wobei dann der passive Sensorteil an der Aufnahme und der aktive Sensorteil am ersten Scharnierteil anordnet ist.

Besonders bevorzugt ist das erste Sensorteil und/oder das zweite Sensorteil mit einer bezüglich Wasser im Wesentlichen dichten Schutzschicht, insbesondere mit einer Vergussmasse, überzogen. Hierdurch kann ein ausreichender Schutz gegen Wasser oder Feuchtigkeit bereitgestellt werden.

Besonders bevorzugt ist das erste Sensorteil bzw. das passive Sensorteil ein Permanentmagnet, dessen mit dem ersten Sensorteil bzw. dem aktiven Sensorteil zu erfassende Oberfläche frei liegt oder dessen Oberfläche mit einer Kunststoffschicht, insbesondere von der Aufnahme oder vom Scharnierteil, überzogen ist.

Vorzugsweise sind die beiden Sensorteile, unabhängig von der Art des Sensors, derart am ersten Scharnierteil bzw. in der Aufnahme angeordnet, dass bei der Bewegung von der Ausgangslage in die Endlage die Distanz zwischen den Sensorteilen sich vergrössert. Der kontaktlose Sensor gibt dann ein Sensorsignal aus, welches der sich vergrössernden Distanz entspricht.

Vorzugsweise sind die Sensorteile derart angeordnet sind, dass diese bei Beaufschlagung des Sitzrings mit einer Gewichtskraft durch den sich auf den Sitzring sitzenden Benutzer nicht mit dieser Gewichtskraft beaufschlagt werden. Das heisst, dass die Sensorteile keiner mechanischen Belastung durch den Gebrauch, sprich durch den sich auf den Sitzringen setzenden Benutzer, ausgesetzt sind. Die Toilettensitzringanordnung ist dadurch sehr robust ausgebildet.

Vorzugsweise ist das erste Sensorteil bezüglich der Bewegung von der Ausgangslage in die Endlage, welche in eine Richtung nach unten erfolgt, oberhalb der Ausgangslage angeordnet ist. Dabei liegt das zweite Sensorteil unterhalb des ersten Sensorteils.

Vorzugsweise ist, insbesondere in der Aufnahme, ein Anschlag bereitgestellt, welcher die Verschiebung des ersten Scharnierteils in der Aufnahme begrenzt, wobei der maximale Verschiebeweg zwischen Ausgangslage und Belastungslage kleiner als 2 Millimetern, insbesondere kleiner als 1 Millimeter, ist. Das erste Scharnierteil steht dabei am Anschlag an. Der Anschlag ist beispielsweise eine Verengung der Aufnahme.

Vorzugsweise ist das erste Scharnierteil über ein Kugelgelenk in der Aufnahme gelagert, wobei das Kugelgelenk vorzugsweise als Schnappgelenk ausgebildet ist. Durch die Ausbildung der Verbindung zwischen Scharnierteil und Aufnahme als Kugelgelenk ergeht der Vorteil, dass eine gute Lagerung unter der Massgabe einer einfachen Verschiebung erreicht wird. Zudem kann die Torsionsbelastung im Gelenk minimiert werden bzw. die Torsionsbelastung ist nicht vorhanden.

Die Kugel des Kugelgelenkes ist vorzuweise am Scharnierteil angeordnet und die Aufnahme umfasst die Kugelpfanne. Eine andere Anordnung ist ebenfalls denkbar.

Besonders bevorzugt ist der Sensor möglichst weit von der Kugel weg angeordnet.

Vorzugsweise weisen die die Aufnahme begrenzenden Wände mindestens eine schlitzartige Öffnung auf, welche der Aufnahme eine grössere Elastizität zur Montage des ersten Scharnierteils in der Aufnahme erlauben. Die Schlitzartigen Öffnungen erhöhen die Flexibilität der Aufnahme, so dass das Scharnierteil einfach in die Aufnahme einsetzbar ist.

Vorzugsweise ist weiterhin ein Rückstellelement, insbesondere eine Druckfeder, angeordnet, welches das erste Scharnierteil in der Aufnahme von der Belastungslage in die Ausgangslage zurückstellt. Mit dem Rückstellelement wird das erste Scharnierteil in seiner Ausgangslage gehalten.

Vorzugsweise stehen die Innenwände der Aufnahme und das erste Scharnierteil über jeweils mindestens eine ebene Kontaktfläche miteinander in Kontakt, derart, dass eine Drehung vom ersten Scharnierteil in der Aufnahme verhinderbar ist.

Die besagte Kontaktfläche ist in Richtung der Bewegung des Scharnierteils von der Ausgangslage in die Belastungslage orientiert. Das heisst, das Scharnierteil bewegt sich auf der besagten Kontaktfläche.

Vorzugsweise sind jeweils zwei Kontaktflächen gegenüber einander angeordnet.

Vorzugsweise steht das zweite Scharnierteil mit dem Sitzring in Verbindung. Das erste Scharnierteil und das zweite Scharnierteil stehen verschwenkbar miteinander in Verbindung, so dass der Sitzring zum Supportelement verschwenkbar ist. Vorzugsweise weist das erste Scharnierteil ausserhalb der Aufnahme einen Lagerabschnitt für das zweite Scharnierteil auf. Im Lagerabschnitt ist das zweite Scharnierteil dann verschwenkbar zum ersten Scharnierteil gelagert. Der Lagerabschnitt kann auch in der Aufnahme angeordnet sein, wobei dann die Aufnahme einen Zugang für das zweite Scharnierteil bereitstellen muss.

Alternativ kann das zweite Scharnierteil auch am Sitzring angeformt sein, beispielsweise als Öffnung, in die das erste Scharnierteil einragt, oder als Bolzen, welcher vom Sitzring in das erste Scharniteil einragt.

Vorzugsweise umfasst mindestens eines der Scharnierteile ein Dämpfungselement, welches die Verschwenkung des Sitzrings relativ zum Supportelement in mindestens eine Richtung dämpft.

Vorzugsweise ist über das Scharnier auch ein Toilettendeckel gelagert.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Toilette mit einer Sitzringanordnung gemäss einer Ausführungsform der vorliegenden Erfindung;
- Fig. 2: die Ansicht nach Figur 1 ohne Toilettendeckel und Sitzring;
- Fig. 3: eine Schnittdarstellung durch das Scharnier der Sitzringanordnung nach Figur 1;
- Fig. 4: eine Schnittdarstellung durch das Scharnier der Sitzringanordnung nach den vorhergehenden Figuren;
- Fig. 5: eine Detailansicht der Figur 4;
- Fig. 6: eine weitere Schnittdarstellung durch das Scharnier der Sitzringanordnung nach den vorhergehenden Figuren; und
- Fig. 7: eine Detailansicht des Scharniers.

### BESCHREIBUNG BEVORZUGTER AUSFÜHRUNGSFORMEN

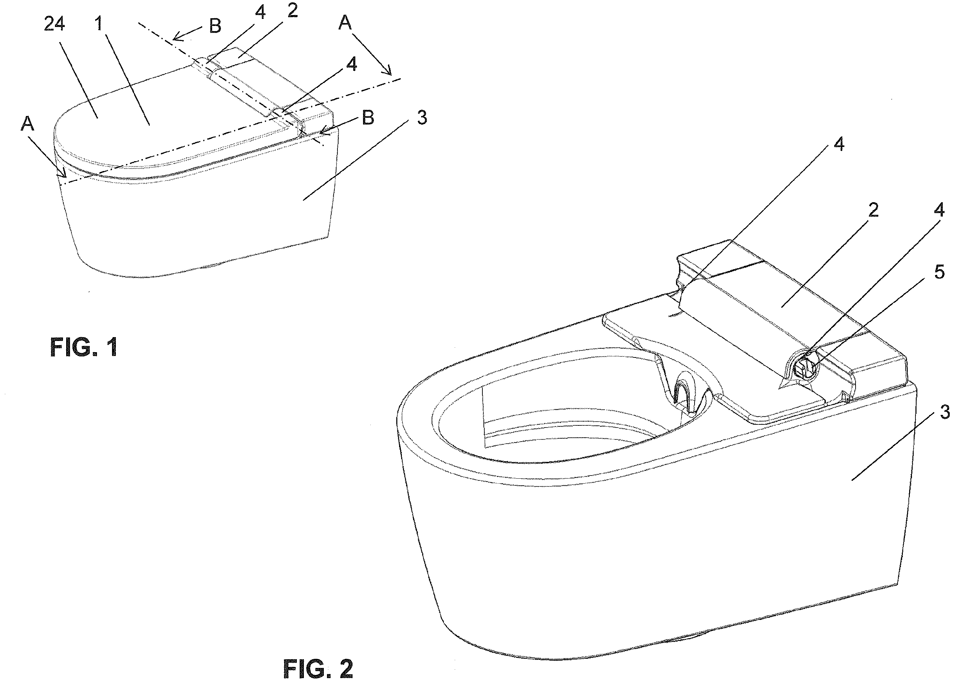

In der Figur 1 wird die Kombination einer Toilette 3 mit einer Toilettensitzringanordnung gezeigt. Die Toilettensitzringanordnung umfasst in der gezeigten Ausführungsform einen Sitzring 1 und einen Deckel 24. Die Toilettensitzringanordnung kann auch ohne die Toilette 3 und ohne den Deckel 24 ausgebildet sein.

In der Figur 2 wird eine perspektivische Darstellung der Figur 1 gezeigt, wobei der Sitzring 1 und der Deckel 24 nicht dargestellt sind.

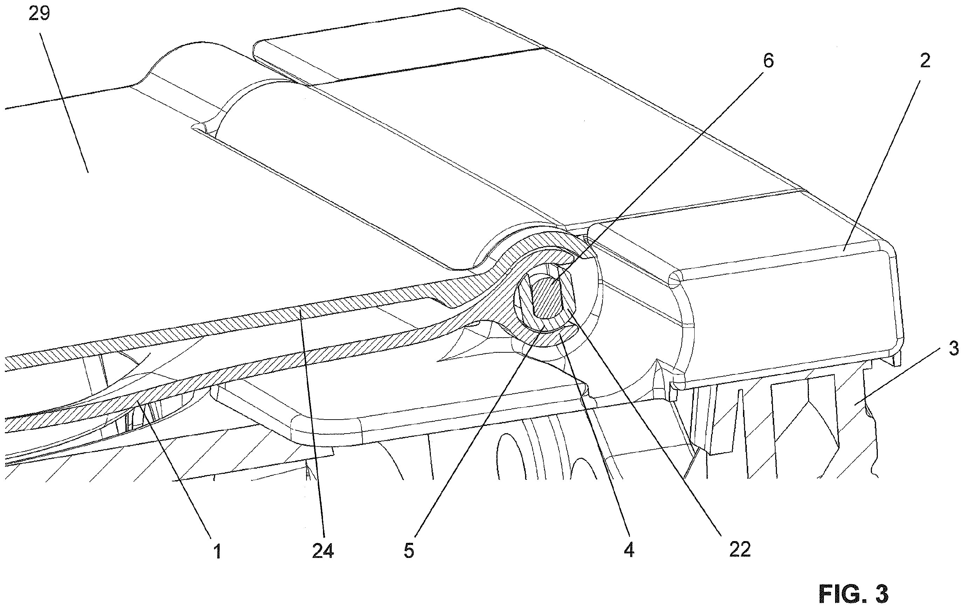

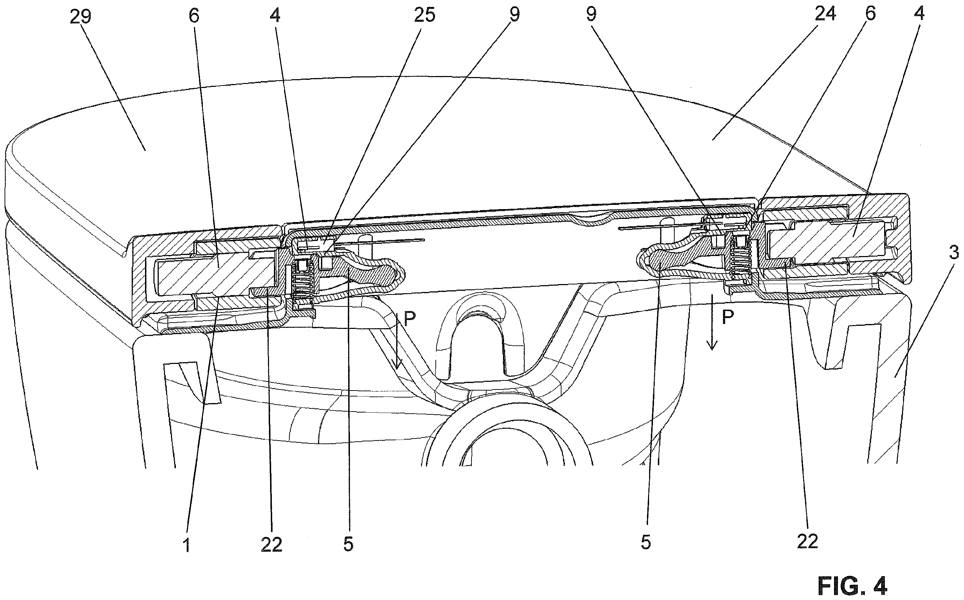

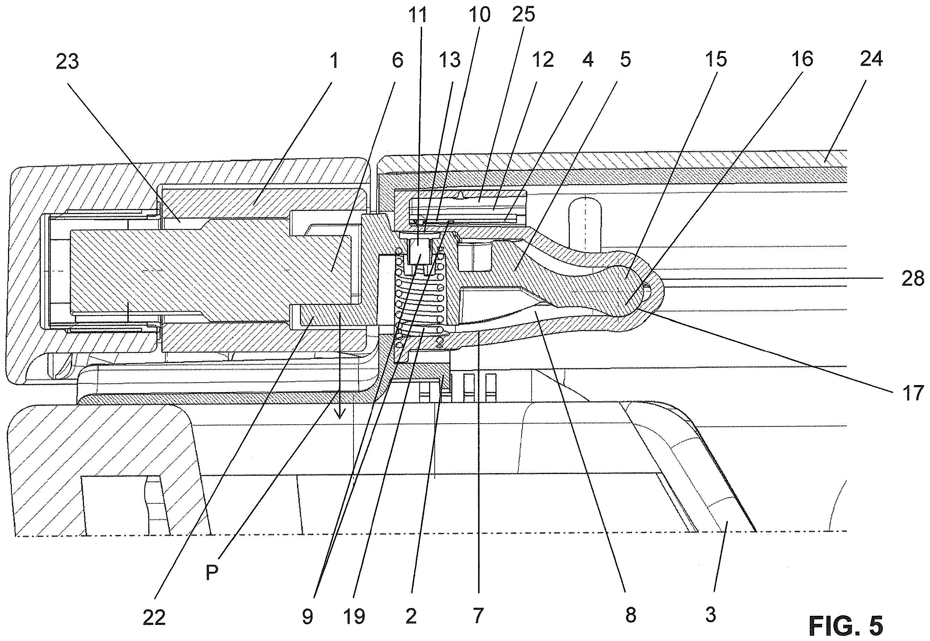

In der Figur 3 wird so dann eine Schnittdarstellung entlang der Schnittlinie A-A gemäss der Figur 1 gezeigt. Die Figur 4 zeigt einen Schnitt entlang der Linie B-B gemäss der Figur 1. Die Figur 5 zeigt eine Detailansicht von der Figur 4.

Die Toilettensitzringanordnung umfasst einen Sitzring 1 und ein Supportelement 2, das insbesondere zur Verbindung der Toilettensitzringanordnung mit der Toilette 3 vorgesehen ist, und mindestens ein Scharnier mit einem ersten Scharnierteil 5 und einem zweiten Scharnierteil 6. In der gezeigten Ausführungsform sind jeweils zwei Scharniere 4, ein linkes Scharnier und ein rechtes Scharnier, angeordnet.

Das Supportelement 2 ist mit seiner Unterseite mit der Toilette 3 verbindbar.

Unter Bezugnahme auf die Figuren 4 und 5 wird nun die Ausbildung der Toilettensitzringanordnung genauer erläutert. Das Scharnier 4 umfasst ein erstes Scharnierteil 5 und ein zweites Scharnierteil 6. Das erste Scharnierteil 5 ist beweglich in einer Aufnahme 8 in Supportelement 2 gelagert. Die Aufnahme 8 ist dabei mit Wänden 7 begrenzt. Das erste Scharnierteil 5 ist dabei derart in der Aufnahme 8 gelagert, dass sich das Scharnier 4 beziehungsweise das erste Scharnierteil 5 von einer Gewichtsbelastung des Sitzrings 1 in der Aufnahme 8 von einer Ausgangslage in eine Belastungslage verschiebt. In den Figuren 4 und 5 befindet sich das erste Scharnierteil 5 in der Ausgangslage. Sobald eine Kraft auf den Sitzring wirkt, wird das erste Scharnierteil 5 und auch das zweite Scharnierteil 6 in Richtung des Pfeils P von der Ausgangslage in die Belastungslage bewegt. Dabei verschiebt sich das erste Scharnierteil und das zweite Scharnierteil 6 nach unten. Der maximale Verschiebeweg W beträgt maximal zwei Millimeter, insbesondere maximal einen Millimeter.

Das zweite Scharnierteil 6 steht mit dem Sitzring in Verbindung. In der gezeigten Ausführungsform ist zudem auch noch der Deckel 24 am zweiten Scharnierteil 6 gelagert. In der gezeigten Ausführungsform steht das erste Scharnierteil und das zweite Scharnierteil verschwenkbar miteinander in Verbindung, so dass der Sitzring 1 zum Supportelement zwei verschwenkbar ist. Eine andere Konfiguration für die Verbindung zwischen dem zweiten Scharniteil 6 und den Sitzring 1 bzw. dem Deckel 24 wäre auch denkbar.

Im Bereich der Aufnahme 8 ist ein kontaktloser Sensor 9 angeordnet. Der kontaktlose Sensor umfasst ein erstes Sensorteil 10 und ein zweites Sensorteil 11. Das erste Sensorteil 10 ist an der Aufnahme 8 festgelegt und das zweite Sensorteil 11 ist am ersten Scharnierteil 5 befestigt. Mit dem Sensor 9 ist das Verschieben des ersten Scharnierteils 6 bezüglich der Aufnahme 8 erfassbar. Der kontaktlose Sensor 9 gibt dabei ein Sensorsignal basierend auf dem Verschiebweg der Ausgangslage in die Belastungslage aus. Das Sensorsignal verändert sich also in Relation zum Verschiebeweg. Anhand der Ausgabe des Sensorsignals kann erfasst werden, ob ein Benutzer sich auf den Sitzring gesetzt hat.

Der kontaktlose Sensor 9 ist vorzugsweise ein induktiver Sensor oder ein kapazitiver Sensor.

Besonders bevorzugt ist der kontaktlose Sensor 9 ein Hallsensor. Der Hallsensor umfasst einen aktiven Sensorteil und einen passiven Sensorteil, wobei das erste Sensorteil 10 vorzugsweise der aktive Sensorteil und das zweite Sensorteil 11 vorzugsweise der passive Sensorteil ist. In der gezeigten Ausführungsform ist der aktive Sensorteil 10 im Bereich der Aufnahme angeordnet und der passive Sensorteil ist im Bereich des ersten Scharnierteils 5 angeordnet. Das aktive Sensorteil umfasst insbesondere eine elektronische Leiterplatine, welche in der gezeigten Ausführungsform in einem Raumbereich 25 angeordnet ist, welcher ausserhalb der Aufnahme 8 vorgesehen ist. Der Raumbereich 25 liegt hier oberhalb der Aufnahme 8. Der Raumbereich 25 wird vorzugsweise mit einer Vergussmasse befüllt, so dass der aktive Sensorteil 10 bezüglich Feuchtigkeit und anderen Umgebungseinflüssen geschützt ist.

Der passive Sensorteil 11 ist vorzugsweise ein Permanentmagnet, dessen Magnetfeld durch den aktiven Sensorteil 10 erfasst werden kann. Der aktive Sensorteil 10 des Hallsensor detektiert die Verschiebung des Permanentmagneten relativ zur Ausgangslage. Hierdurch kann der Hallsensor die Distanz erfassen und gibt ein entsprechendes Sensorsignal aus.

Der Permanentmagnet weist dabei eine mit dem aktiven Sensorteil 9 zu erfassende Oberfläche 13 auf. Die Oberfläche 13 kann dabei frei liegen oder sie kann mit einer Kunststoffschicht überzogen sein.

Von der Figur 5 wird klar, dass sich bei der Bewegung von der Ausgangslage in die Endlage die Distanz zwischen den beiden Sensorteilen 10, 11 vergrössert. Diese Anordnung hat den Vorteil, dass der aktive Sensorteil 10 derart angeordnet werden kann, dass dieser nicht mit einer Gewichtskraft, wenn sich der Benutzer auf den Sitzring 1 setzt, beaufschlägt wird. Das heisst, die Sensorteile 10, 11 sind derart angeordnet, dass diese bei Beaufschlagung des Sitzrings 1 mit einer Gewichtskraft durch den sich auf den Sitzring 1 setzenden Benutzer nicht mit dieser Gewichtskraft beaufschlagt werden.

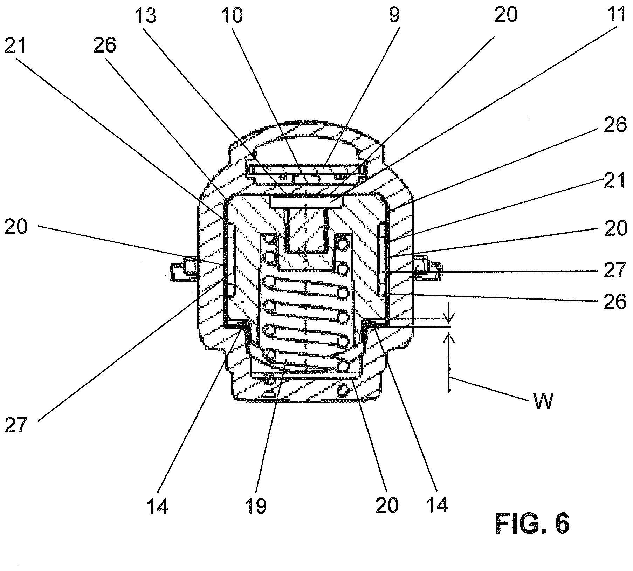

In der Aufnahme 8 ist weiterhin ein Anschlag 14 bereitgestellt. Dieser Anschlag 14 wird in der Figur 6 genauer gezeigt. In der Figur 6 ist zudem der Verschiebeweg W des ersten Scharnierteils 5 in der Aufnahme 8 dargestellt. Der Anschlag 14 stellt einen Anschlag für das erste Scharnierteil 5 in der Aufnahme 8 bereit und begrenzt somit den maximalen Verschiebeweg W. Vorzugsweise ist der maximale Verschiebeweg W wie oben erwähnt kleiner als 2 Millimeter insbesondere kleiner als 1 Millimeter. Die Ausbildung des möglichst kleinen Verschiebeweges W ist vorteilhaft, weil dem Benutzer eine möglichst starre Vorrichtung bereitgestellt werden kann, wobei mit dem kontaktlosen Sensor 9 gleichermassen die Verschiebung einfach zu erfassen ist.

Von der Figur 5 wird gezeigt, dass das erste Scharnierteil 5 über ein Kugelgelenk 15 in der Aufnahme 8 gelagert ist. Das Kugelgelenk 15 ist vorzugsweise als Schnappgelenk ausgebildet. Das Kugelgelenk 15 liegt dabei gegenüber einem Lagerabschnitt 22, an welchem das zweite Scharnierteil 6 in das erste Scharnierteil 5 eingreift bzw. gelagert ist. Bei der Bewegung von der Ausgangslage in die Belastungslage verschwenkt sich somit das erste Scharnierteil 5 um das Zentrum des Kugelgelenkes.

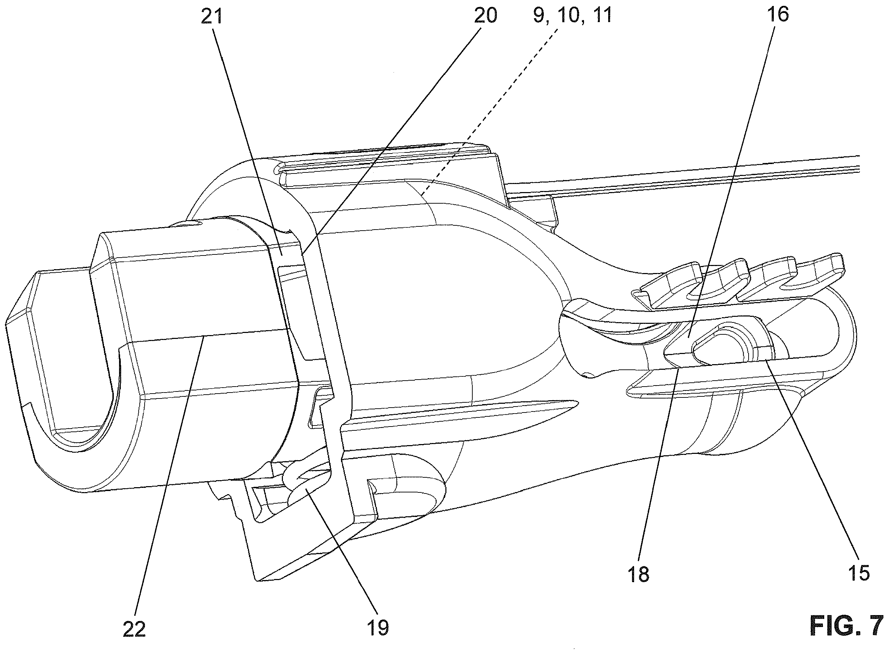

In der gezeigten Ausführungsform ist die Kugel 16 des Kugelgelenkes 15 am ersten Scharnierteil 5 angeordnet und die Aufnahme 8 stellt in ihrem hinteren Bereich eine Kugelpfanne 17 bereit. Die Wände 7, welche die Aufnahme 8 begrenzen umfassen vorzugsweise mindestens eine schlitzartige Öffnung 18. Eine derartige schlitzartige Öffnung 18 verleiht der Aufnahme 8 eine grössere Elastizität, was die Montage des ersten Scharnierteils 5 in der Aufnahme 8 erleichtert. Die schlitzartige Öffnung 18 wird in der Figur 7 gezeigt.

Eine umgekehrte Anordnung von Kugel 16 und Kugelpfanne 17 wäre auch denkbar.

Im Bereich der Kugelpfanne 17 ist vorzugsweise eine Ausbuchtung 28 angeordnet, welche der Kugelpfanne 17 leicht federelastische Eigenschaften verleiht, so dass das Einschieben der Kugel 16 vereinfacht wird.

Die Toilettensitzringanordnung umfasst weiterhin ein Rückstellelement 19. In der gezeigten Ausführungsform ist das Rückstellelement eine Druckfeder, welche das erste Scharnierteil 5 in der Aufnahme 8 von der Belastungslage in die Ausgangslage zurückstellt. Die Druckfeder ist hier unterhalb des passiven Sensorteils angeordnet.

Die Innenwände 20 der Aufnahme 8 und das erste Scharnierteil 3 stehen jeweils über mindestens eine ebene Kontaktfläche 21, 26 mit einander in Verbindung. Die Kontaktfläche 21, 26 ist in der gezeigten Ausführungsform seitlich zur Bewegungsrichtung des ersten Scharnierteils 5 angeordnet und wird in der Figur 6 gezeigt. Dabei gleitet das erste Scharnierteil 5 mit der Kontaktfläche 26 entlang der Kontaktfläche 21 von der Ausgangslage in die Belastungslage. Aufgrund der ebenen Ausbildungen wird eine Drehung vom ersten Scharnierteil 5 in der Aufnahme 8 verhindert. Die Kontaktfläche 26 am Scharnierteil ist ebenfalls eben ausgebildet und weist eine Unterbrechung 27 auf.

Von der Figur 4 wird zudem klar, dass in der gezeigten Ausführungsform nur eines der beiden Scharniere mit dem kontaktlosen Sensor 9 ausgebildet ist. Das andere der beiden Scharniere ist zwar baugleich ausgebildet, weist aber nicht den Sensor auf. Alternativerweise kann auch an beiden Scharnieren jeweils ein Sensor angeordnet werden.

Wie oben bereits erläutert umfasst das erste Scharnierteil 5 ausserhalb der Aufnahme 8 einen Lagerabschnitt 22, in welchem das zweite Scharnierteil 6 gelagert ist. In der gezeigten Ausführungsform ist das zweite Scharnierteil 6 im Lagerabschnitt 22 drehbar gelagert. Es wäre aber auch denkbar, dass das zweite Scharnierteil 6 fest im Lagerabschnitt 22 gelagert ist und das dann der Sitzring 1 beziehungsweise der Deckel 24 sich um den festgelagerten zweiten Scharnierteil 6 herumdrehen.

Weiterhin umfasst mindestens eines der Scharnierteile 5, 6, je das zweite Scharnierteil 6, ein Dämpfungselement 23. Mit dem Dämpfungselement 23 lässt sich die Verschwenkung des Sitzringes relativ zum Supportelement in mindestens eine Richtung dämpfen.

**BEZUGSZEICHENLISTE**

| | | | |
|---|---|---|---|
| 1 | Sitzring | 25 | Raumbereich |
| 2 | Supportelement | 26 | ebene Kontaktfläche |
| 3 | Toilette | 27 | Unterbrechung |
| 4 | Scharnier | 28 | Ausbuchtung |
| 5 | erstes Scharnierteil | | |
| 6 | zweites Scharnierteil | W | Verschiebeweg |
| 7 | Wand | P | Verschieberichtung |
| 8 | Aufnahme | | |
| 9 | kontakloser Sensor | | |
| 10 | erster Sensorteil | | |
| 11 | zweiter Sensorteil | | |
| 12 | Schutzschicht | | |
| 13 | Oberfläche | | |
| 14 | Anschlag | | |
| 15 | Kugelgelenk | | |
| 16 | Kugel | | |
| 17 | Kugelpfanne | | |
| 18 | schlitzartige Öffnung | | |
| 19 | Rückstellelement | | |
| 20 | Innenwände | | |
| 21 | Kontaktfläche | | |
| 22 | Lagerabschnitt | | |
| 23 | Dämpfungselement | | |
| 24 | Deckel | | |

## Patentansprüche

1. Toilettensitzringanordnung umfassend
einen Sitzring (1),
ein Supportelement (2), zur Verbindung der Toilettensitzringanordnung mit einer Toilette (3),
und mindestens ein Scharnier (4) mit einem ersten Scharnierteil (5) und einem zweiten Scharnierteil (6),
wobei das erste Scharnierteil (5) beweglich in einer teilweise mit Wänden (7) begrenzten Aufnahme (8) über ein Kugelgelenk (15) gelagert ist, derart, dass sich das Scharnier (4) bzw. das erste Scharnierteil (5) bei einer Gewichtsbelastung des Sitzrings (1) in der Aufnahme (8) von einer Ausgangslage in eine Belastungslage verschiebt,
wobei die Aufnahme (8) Teil des Supportelementes (2) ist oder mit diesem fest verbindbar ist, und
wobei das zweite Scharnierteil (6) zum ersten Scharnierteil (6) verschwenkbar ist, so dass der Sitzring (1) zum Supportelement (2) verschwenkbar ist,
wobei im Bereich der Aufnahme (8) ein kontaktloser Sensor (9) mit einem an der Aufnahme (8) festgelegten ersten Sensorteil (10) und einem am ersten Scharnierteil (5) festgelegten zweiten Sensorteil (11) vorgesehen ist, mit welchem Sensor (9) das Verschieben des ersten Scharnierteils (5) erfassbar ist und Sensorsignal basierend auf dem Verschiebeweg ausgebbar ist.

2. Toilettensitzringanordnung nach Anspruch 1, **dadurch gekennzeichnet, dass** der kontaktlose Sensor (9) ein induktiver Sensor oder kapazitiver Sensor ist.

3. Toilettensitzringanordnung nach Anspruch 1 oder 2, **dadurch gekennzeichnet, dass** der kontaktlose Sensor (9) ein Hallsensor mit einem aktiven Sensorteil und einem passiven Sensorteil ist, wobei das erste Sensorteil (10) der aktive Sensorteil und das zweite Sensorteil (11) der passive Sensorteil ist.

4. Toilettensitzringanordnung nach einem der vorhergehenden Ansprüche, **dadurch gekennzeichnet, dass** das erste Sensorteil (10) und/oder das zweite Sensorteil (11) mit einer bezüglich Wasser im Wesentlichen dichten Schutzschicht (12), insbesondere mit einer Vergussmasse, überzogen sind.

5. Toilettensitzringanordnung nach Anspruch 2 bis 4, **dadurch gekennzeichnet, dass** das zweite Sensorteil (11) bzw. das passive Sensorteil ein Permanentmagnet ist, dessen mit dem ersten Sensorteil (10) bzw. dem aktiven Sensorteil (9) zu erfassende Oberfläche (13) frei liegt oder dessen Oberfläche (13) mit einer Kunststoffschicht, insbesondere von der Aufnahme (8) oder vom Scharnierteil (5), überzogen ist.

6. Toilettensitzringanordnung nach einem der vorhergehenden Ansprüche, **dadurch gekennzeichnet, dass** bei der Bewegung von der Ausgangslage in die Endlage die Distanz zwischen den Sensorteilen (10, 11) sich vergrössert.

7. Toilettensitzringanordnung nach einem der vorhergehenden Ansprüchen, **dadurch gekennzeichnet, dass** die Sensorteile (10, 11) derart angeordnet sind, dass diese bei Beaufschlagung des Sitzrings (2) mit einer Gewichtskraft durch den sich auf den Sitzring (2) sitzenden Benutzer nicht mit dieser Gewichtskraft beaufschlagt werden.

8. Toilettensitzringanordnung nach einem der vorhergehenden Ansprüche, **dadurch gekennzeichnet, dass** bezüglich der Bewegung von der Ausgangslage in die Endlage, welche in eine Richtung nach unten erfolgt, das erste Sensorteil (10) oberhalb der Ausgangslage angeordnet ist.

9. Toilettensitzringanordnung nach einem der vorhergehenden Ansprüche, **dadurch gekennzeichnet, dass**, insbesondere in der Aufnahme (8), ein Anschlag (14) bereitgestellt ist, welcher die Verschiebung des ersten Scharnierteils (5) in der Aufnahme (8) begrenzt, wobei der maximale Verschiebeweg (W) zwischen Ausgangslage und Belastungslage kleiner als 2 Millimetern, insbesondere kleiner als 1 Millimeter, ist.

10. Toilettensitzringanordnung nach einem der vorhergehenden Ansprüche, **dadurch gekennzeichnet, dass** das erste Scharnierteil (5) über ein Kugelgelenk (15) in der Aufnahme (8) gelagert ist, wobei das Kugelgelenk (15) vorzugsweise als Schnappgelenk ausgebildet ist.

11. Toilettensitzringanordnung nach Anspruch 9 oder 10, **dadurch gekennzeichnet, dass** die die Aufnahme (8) begrenzenden Wände (7) mindestens eine schlitzartige Öffnung (18) umfassen, welche der Aufnahme (8) eine grössere Elastizität zur Montage des ersten Scharnierteils (5) in der Aufnahme (8) bereitstellt.

12. Toilettensitzringanordnung nach einem der vorhergehenden Ansprüche, **dadurch gekennzeichnet, dass** weiterhin ein Rückstellelement (19), insbesondere eine Druckfeder, angeordnet ist, welches das erste Scharnierteil (5) in der Aufnahme (8) von der Belastungslage in die Ausgangslage zurückstellt.

13. Toilettensitzringanordnung nach einem der vorhergehenden Ansprüche, **dadurch gekennzeichnet, dass** die Innenwände (20) der Aufnahme (8) und das erste Scharnierteil (5) über jeweils mindestens eine ebene Kontaktfläche (21, 26) miteinander in Kontakt stehen, derart, dass eine Drehung vom ersten Scharnierteil (5) in der Aufnahme (8) verhinderbar ist.

14. Toilettensitzringanordnung nach einem der vorhergehenden Ansprüche, **dadurch gekennzeichnet, dass** das erste Scharnierteil (5) ausserhalb der Aufnahme (8) einen Lagerabschnitt (22) für das zweite Scharnierteil (6) aufweist.

15. Toilettensitzringanordnung nach einem der vorhergehenden Ansprüche, **dadurch gekennzeichnet, dass** zwei Scharniere (4) angeordnet sind, wobei die Scharniere (4) vorzugsweise im Wesentlichen baugleich ausgebildet sind, und wobei vorzugsweise nur eines der beiden Scharniere (4) mit dem kontaktlosen Sensor (9) ausgerüstet sind.

## Claims

1. Toilet seat ring arrangement comprising
a seat ring (1)
a support element (2) for connecting the toilet seat ring arrangement to a toilet (3),
and at least one hinge (4) having a first hinge part (5) and a second hinge part (6),
wherein the first hinge part (5) is mounted in a movable manner in a receptacle (8) delimited partially by walls (7) via a ball joint (15), such that, when the seat ring (1) is subjected to a weight load, the hinge (4), or the first hinge part (5), moves in the receptacle (8) from a starting position into a loaded position,
wherein the receptacle (8) is part of the support element (2) or is firmly connectable thereto, and
wherein the second hinge part (6) is pivotable with respect to the first hinge part (6) such that the seat ring (1) is pivotable with respect to the support element (2),
wherein a contactless sensor (9) having a first sensor part (10) fixed to the receptacle (8) and a second sensor part (11) fixed to the first hinge part (5) is provided in the region of the receptacle (8), with which sensor (9) the displacement of the first hinge part (5) is able to be sensed and a sensor signal is able to be output on the basis of the displacement travel.

2. Toilet seat ring arrangement according to Claim 1, **characterized in that** the contactless sensor (9) is an inductive sensor or capacitive sensor.

3. Toilet seat ring arrangement according to Claim 1 or 2, **characterized in that** the contactless sensor (9) is a Hall sensor with an active sensor part and a passive sensor part, wherein the first sensor part (10) is the active sensor part and the second sensor part (11) is the passive sensor part.

4. Toilet seat ring arrangement according to one of the preceding claims, **characterized in that** the first sensor part (10) and/or the second sensor part (11) are coated with a substantially watertight protective layer (12), in particular with a casting compound.

5. Toilet seat ring arrangement according to Claims 2 to 4, **characterized in that** the second sensor part (11), or the passive sensor part, is a permanent magnet, the surface (13) of which to be sensed by the first sensor part (10), or the active sensor part (9), is exposed, or the surface (13) of which is coated with a plastics layer, in particular of the receptacle (8) or of the hinge part (5) .

6. Toilet seat ring arrangement according to one of the preceding claims, **characterized in that**, during the movement from the starting position to the end position, the distance between the sensor parts (10, 11) increases.

7. Toilet seat ring arrangement according to one of the preceding claims, **characterized in that** the sensor parts (10, 11) are arranged such that, when the seat ring (2) is subjected to a weight force by a user sitting on the seat ring (2), said sensor parts (10, 11) are not subjected to this weight force.

8. Toilet seat ring arrangement according to one of the preceding claims, **characterized in that**, with regard to the movement from the starting position to the end position, which takes place in a downward direction, the first sensor (10) is arranged above the starting position.

9. Toilet seat ring arrangement according to one of the preceding claims, **characterized in that**, in particular in the receptacle (8), a stop (14) is provided, which limits the displacement of the first hinge part (5) in the receptacle (8), wherein the maximum displacement travel (W) between the starting position and loaded position is less than 2 millimetres, in particular less than 1 millimetre.

10. Toilet seat ring arrangement according to one of the preceding claims, **characterized in that** the first hinge part (5) is mounted in the receptacle (8) via a ball joint (15), wherein the ball joint (15) is configured preferably as a snap joint.

11. Toilet seat ring arrangement according to Claim 9 or 10, **characterized in that** the walls (7) delimiting the receptacle (8) comprise at least one slot-like opening (18) that provides the receptacle (8) with greater elasticity for mounting the first hinge part (5) in the receptacle (8).

12. Toilet seat ring arrangement according to one of the preceding claims, **characterized in that** a return element (19), in particular a compression spring, is furthermore arranged, which returns the first hinge part (5) in the receptacle (8) from the loaded position to the starting position.

13. Toilet seat ring arrangement according to one of the preceding claims, **characterized in that** the internal walls (20) of the receptacle (8) and the first hinge part (5) are in contact with one another via in each case at least one planar contact face (21, 26), such that a rotation of the first hinge part (5) in the receptacle (8) is able to be prevented.

14. Toilet seat ring arrangement according to one of the preceding claims, **characterized in that** the first hinge part (5) has, outside the receptacle (8), a bearing portion (22) for the second hinge part (6).

15. Toilet seat ring arrangement according to one of the preceding claims, **characterized in that** two hinges (4) are arranged, wherein the hinges (4) are configured preferably with a substantially identical construction, and wherein preferably only one of the two hinges (4) is equipped with the contactless sensor (9).

## Revendications

1. Ensemble de lunette de toilettes comportant
une lunette de toilettes (1),
un élément de support (2), servant à la liaison de l'ensemble de lunette de toilettes à une cuvette de toilettes (3),
et au moins une charnière (4) dotée d'une première partie de charnière (5) et d'une deuxième partie de charnière (6),
dans lequel la première partie de charnière (5) est montée mobile par le biais d'une articulation à rotule (15) dans un logement (8) délimité partiellement par des parois (7), de telle sorte que la charnière (4) ou la première partie de charnière (5) se déplace d'une position initiale à une position de charge dans le logement (8) dans le cas d'une charge de poids de la lunette de toilettes (1),
dans lequel le logement (8) fait partie de l'élément de support (2) ou peut être relié fixement à celui-ci, et dans lequel la deuxième partie de charnière (6) peut être pivotée par rapport à la première partie de charnière (6) de telle sorte que la lunette de toilettes (1) peut être pivotée par rapport à l'élément de support (2),
dans lequel, dans la région du logement (8), il est prévu un capteur sans contact (9) doté d'une première partie de capteur (10) fixée au logement (8) et d'une deuxième partie de capteur (11) fixée à la première partie de charnière (5), capteur (9) à l'aide duquel le déplacement de la première partie de charnière (5) peut être détecté et un signal de capteur basé sur le trajet de déplacement peut être délivré.

2. Ensemble de lunette de toilettes selon la revendication 1, **caractérisé en ce que** le capteur sans contact (9) est un capteur inductif ou un capteur capacitif.

3. Ensemble de lunette de toilettes selon la revendication 1 ou 2, **caractérisé en ce que** le capteur sans contact (9) est un capteur de Hall doté d'une partie de capteur active et d'une partie de capteur passive, la première partie de capteur (10) étant la partie de capteur active et la deuxième partie de capteur (11) étant la partie de capteur passive.

4. Ensemble de lunette de toilettes selon l'une des revendications précédentes, **caractérisé en ce que** la première partie de capteur (10) et/ou la deuxième partie de capteur (11) sont revêtues d'une couche protectrice (12) sensiblement étanche à l'eau, en particulier d'une masse de scellement.

5. Ensemble de lunette de toilettes selon les revendications 2 à 4, **caractérisé en ce que** la deuxième partie de capteur (11) ou la partie de capteur passive est un aimant permanent dont la surface (13) à détecter à l'aide de la première partie de capteur (10) ou de la partie de capteur active (9) est dégagée, ou dont la surface (13) est revêtue avec une couche de matière synthétique, en particulier du logement (8) ou de la partie de charnière (5).

6. Ensemble de lunette de toilettes selon l'une des revendications précédentes, **caractérisé en ce que** lors du déplacement de la position initiale à la position finale, la distance entre les parties de capteur (10, 11) augmente.

7. Ensemble de lunette de toilettes selon l'une des revendications précédentes, **caractérisé en ce que** les parties de capteur (10, 11) sont disposées de telle sorte que celles-ci, lorsque la lunette toilettes (2) est soumise à un poids par l'utilisateur assis sur la lunette de toilettes (2), ne sont pas soumises à ce poids.

8. Ensemble de lunette de toilettes selon l'une des revendications précédentes, **caractérisé en ce que**, par rapport au déplacement de la position initiale à la position finale, lequel s'effectue dans un sens vers le bas, la première partie de capteur (10) est disposée au-dessus de la position initiale.

9. Ensemble de lunette de toilettes selon l'une des revendications précédentes, **caractérisé en ce qu'**une butée (14) est fournie en particulier dans le logement (8), laquelle limite le déplacement de la première partie de charnière (5) dans le logement (8), le trajet de déplacement maximal (W) entre la position initiale et la position de charge étant inférieur à 2 millimètres, en particulier inférieur à 1 millimètre.

10. Ensemble de lunette de toilettes selon l'une des revendications précédentes, **caractérisé en ce que** la première partie de charnière (5) est montée dans le logement (8) par le biais d'une articulation à rotule (15), l'articulation à rotule (15) étant réalisée de préférence sous forme d'articulation à déclic.

11. Ensemble de lunette de toilettes selon la revendication 9 ou 10, **caractérisé en ce que** les parois (7) délimitant le logement (8) comportent au moins une ouverture (18) de type fente, laquelle confère au logement (8) une plus grande élasticité pour le montage de la première partie de charnière (5) dans le logement (8) .

12. Ensemble de lunette de toilettes selon l'une des revendications précédentes, **caractérisé en ce qu'**en outre un élément de rappel (19), en particulier un ressort de compression, est prévu, lequel rappelle la première partie de charnière (5) dans le logement (8), de la position de charge à la position initiale.

13. Ensemble de lunette de toilettes selon l'une des revendications précédentes, **caractérisé en ce que** les parois intérieures (20) du logement (8) et la première partie de charnière (5) sont en contact les unes avec les autres par le biais de respectivement au moins une surface de contact plane (21, 26), de telle sorte qu'une rotation de la première partie de charnière (5) dans le logement (8) peut être empêchée.

14. Ensemble de lunette de toilettes selon l'une des revendications précédentes, **caractérisé en ce que** la première partie de charnière (5) comprend, à l'extérieur du logement (8), une partie de montage (22) pour la deuxième partie de charnière (6).

15. Ensemble de lunette de toilettes selon l'une des revendications précédentes, **caractérisé en ce que** deux charnières (4) sont prévues, les charnières (4) étant de préférence sensiblement de construction identique, et de préférence seulement l'une des deux charnières (4) étant équipée du capteur sans contact (9).
